# EUROPÄISCHE PATENTSCHRIFT

(11) **EP 1 444 286 B1**
(45) Veröffentlichungstag und Bekanntmachung des Hinweises auf die Patenterteilung: **31.05.2006**
(21) Anmeldenummer: 03747404.6
(22) Anmeldetag: 02.04.2003
(51) Int. Cl.: C08G 63/78, C08G 64/20, B01J 19/24, B01J 19/20

(54) **VERFAHREN UND VORRICHTUNG ZUR HERSTELLULNG VON POLYESTERN, COPOLYESTERN AND POLYCARBONATEN**
METHOD AND DEVICE FOR PRODUCING POLYESTERS, COPOLYESTERS AND POLYCARBONATES
PROCEDE ET DISPOSITIF DE FABRICATION DE POLYESTERS, COPOLYESTERS ET POLYCARBONATES

(30) Priorität: 02.05.2002 DE 10219671
(43) Veröffentlichungstag der Anmeldung: 11.08.2004
(73) Patentinhaber: Zimmer AG, 60388 Frankfurt am Main (DE)
(72) Erfinder: WILHELM, Fritz, 61184 Karben (DE); REISEN, Michael, 60316 Frankfurt am Main (DE)
(74) Vertreter: Meyer-Dulheuer, Karl-Hermann
(86) Internationale Anmeldenummer: PCT/EP2003/003412
(87) Internationale Veröffentlichungsnummer: WO 2003/093345

(56) Entgegenhaltungen:
- EP-A- 0 738 743
- WO-A-00/76657
- WO-A-02/46266
- FR-A- 1 418 672
- US-A- 3 974 126
- US-A- 5 480 616
- US-B1- 6 359 106
- DATABASE WPI Section Ch, Week 200105 Derwent Publications Ltd., London, GB; Class A23, AN 2001-036264 XP002248971 & JP 2000 302874 A (TEIJIN LTD), 31. Oktober 2000 (2000-10-31)
- DATABASE WPI Section Ch, Week 198643 Derwent Publications Ltd., London, GB; Class A23, AN 1986-282570 XP002248972 & JP 61 207429 A (KOKORITSU GOSEN GIJUTSU) , 13. September 1986 (1986-09-13)

## Beschreibung

Die Erfindung betrifft ein Verfahren und eine Vorrichtung zur Herstellung von Polyestern, Copolyestern und Polycarbonaten durch Veresterung von Dicarbonsäuren oder Dicarbonsäureestern und Diolen oder durch Umesterung von Dialkylcarbonaten oder Diarylcarbonaten mit Bisphenolen in wenigstens einer Reaktionsstufe, Vorpolykondensation des Veresterungs- oder Umesterungsprodukts in wenigstens einer Reaktionsstufe und Polykondensation des Vorpolykondensationsprodukts in wenigstens einer Polykondensationsstufe.

Für die kontinuierliche Herstellung von Polyethylenterephthalat (PET) und dessen Copolyestem werden Terephthalsäure (PTA) oder Dimethylterephthalat (DMT) und Ethylenglycol (EG) sowie ggf. weitere Comonomere als Ausgangsstoffe eingesetzt. PTA wird mit EG und einer Katalysatorlösung zu einer Paste gemischt und einer ersten Reaktionsstufe zur Veresterung aufgegeben, in der die Veresterung bei Atmosphären- oder Überatmosphärendruck unter Abspaltung von Wasser erfolgt. Wenn DMT benutzt wird, werden die DMT-Schmelze und der Katalysator zusammen mit dem EG einer ersten Reaktionsstufe zur Umesterung zugeleitet, in der die Reaktion bei Atmosphärendruck unter Abspaltung von Methanol (MeOH) erfolgt. Die abgespaltenen Stoffe werden gemeinsam mit destilliertem EG einer Rektifikationskolonne zur Wiedergewinnung von EG zugeleitet.

Das wiedergewonnene EG wird erneut zur Veresterung oder zur Herstellung der Paste eingesetzt. Der Produktstrom der Ver-/Umesterung wird einer Reaktionsstufe zur Vorpolykondensation, die im Regelfall unter Vakuum durchgeführt wird, zugeführt. Der Produktstrom der Vorpolykondensation wird in eine Realctionsstufe zur Polykondensation eingetragen. Die erhaltene Polyesterschmelze wird direkt zu Fasern oder zu Chips verarbeitet. Beim Verfahren zur Herstellung von PET erfolgt die Veresterung in zwei als Rührbehälter ausgebildeten Reaktionsstufen. Bei Anlagenkapazitäten bis zu 400 t/Tag wird die Vorpolykondensation in einem stehenden Kaskadenreaktor mit bodenläufigem Rührer und bei Anlagekapazitäten bis 900 t/Tag in zwei Polykondensationsstufen einer ersten als Rührbehälter ausgebildeten Reaktionsstufe und einem anschließenden, liegenden Kaskadenreaktor durchgeführt. Zur Polykondensation wird ebenfalls ein liegender Kaskadenreaktor benutzt. Diese liegenden Kaskadenreaktoren beinhalten eine sumpfseitige Kammerung und ein mit senkrechten Loch- oder Ringscheiben bestücktes Rührwerk auf einer waagrechten Welle zum Zwecke einer definierten Oberflächenerzeugung.

Die zwei Veresterungsstufen, zwei Vorpolykondensationsstufen und eine Polykondensationsstufe umfassende Anlage, von denen die ersten drei Reaktionsstufen als Rührbehälter und die letzten beiden Reaktionsstufen als liegende Kaskadenreaktoren ausgebildet sind, gestattet eine hohe Stabilität und Flexibilität der PET-Herstellung und bietet darüber hinaus die besten Möglichkeiten zur Erhöhung der Anlagenkapazität, was jedoch mit einer nicht unbeachtlichen Steigerung der Aufwendungen für Ausrüstungen und Gebäude verbunden ist (Schumann, Heinz-Dieter: Polyester producing plants: principles and technology. Landsberg/Lech: Verl. Moderne Industrie, 1996, S. 27 bis 33).

Bei einer Anlage, bestehend aus zwei Rührbehältern zur Veresterung, einem Etagenreaktor zur Vorpolykondensation und einem liegenden Kaskadenreaktor zur Polykondensation ergibt sich bei relativ geringerem Aufwand eine vergleichbare Stabilität und Flexibilität der Polyester-Herstellung, allerdings ist von Nachteil, dass sich die Abmessungen der Reaktoren der Vorpolykondensations- und der Polykondensationsstufe wegen erhöhter Brüdenvolumina vergrößern und die zulässigen Transportabmessungen bereits bei mittleren Anlagekapazitäten erreicht werden.

Es ist die Aufgabe der vorliegenden Erfindung, ausgehend von vorstehend beschriebenen Stand der Technik, eine Verfahren und eine Vorrichtung zur Durchführung des Verfahrens bereitzustellen, die eine wesentliche Steigerung der Kapazitäten aus vier Reaktionsstufen gebildeten Anlagen zur Herstellung von PET und alternativ eine Überführung großer fünf Reaktionsstufen umfassender Anlagen auf vier Reaktionsstufen ohne Erhöhung der Dampfbelastung und/oder der erhöhten Gefahr des Produktmitrisses durch die Brüden bei der Vorpolykondensation bzw. Polykondensation erlauben. Ferner soll bei Herstellung von Polybutylenterephthalat (PBT) aus PTA und 1.4-Butandiol (BDO) eine kritische Dampfbelastung bereits in der unter Vakuum betriebenen Verestungsstufe vermieden werden.

Die Lösung dieser Aufgabe besteht darin, dass bei wenigstens einer der Reaktionsstufen der zugeführte Produktstrom vor oder innerhalb der Reaktionsstufe in mindestens zwei Teilströme aufgeteilt und die Teilströme ganz oder teilweise getrennt voneinander durch die Reaktionsstufe geleitet werden.

Im Rahmen der weiteren Ausgestaltung der Erfindung werden die Teilströme, vorzugsweise in gleich großen Mengen, bis zu einem gemeinsamen Produktabfluß aufeinander zulaufend durch die Reaktionsstufe oder in der Reaktionsstufe abschnittsweise parallel zueinander in Richtung eines gemeinsamen Produktabflusses geleitet, wobei die Teilströme in der Reaktionsstufe spätestens beim Auslaß zusammengeführt werden und die Menge der in die Reaktionsstufen ein- und ausgeleiteten Produktströme kontrolliert wird.

Eine erfindungsgemäße Alternative besteht darin, dass die Teilströme in der Reaktionsstufe für die Vorpolykondensation oder Polykondensation in entgegengesetzter Richtung auseinanderlaufend zu getrennten Auslässen geleitet werden.

Für die Durchführung des Verfahrens ist im Rahmen des Ausbildung der Erfindung ein Kaskadenreaktor oder Käfigreaktor vorgesehen, der mindestens zwei räumlich getrennte, in nacheinander separat durchströmbare Teilräume gegliederte Abschnitte aufweist.

Als liegender Kaskadenreaktor wird bevorzugt ein Rührscheibenreaktor mit Loch- oder Ringscheiben eingesetzt.

Bei aufeinander zulaufenden Teilströmen sind der Einlaß für die Teilströme jeweils an den Stirnseiten und der Auslaß für den aus den Teilströmen gebildeten Produktstrom im Mittelbereich des Rührscheibenreaktor angebracht.

Im Falle einer Produktlinienverzweigung oder einer Produktdifferenzierung durch unterschiedliche Viskositäten ist es auch sinnvoll, den Einlaß für den zur Bildung der Teilströme zugeführten Produktstrom im Mittelbereich und dementsprechend den Auslaß der Teilströme jeweils an den Enden des Rührscheibenreaktors vorzusehen.

Anstelle eines Rührscheibenreaktors ist auch der Einsatz eines stehenden Etagenreaktors möglich, bei dem die Einlässe für den Produktstrom im Kopfbereich und der Auslaß für den Produktstrom der zusammengeführten Teilströme im Boden angeordnet sind und zumindest im oberen Abschnitt parallel geschaltete Etagen für die separate Führung der Teilströme und eine anschließende Etage oder ein Bodenraum für die Zusammenführung der Teilströme vorhanden sind.

Ein Etagenreaktor kann so eingesetzt werden, dass Einlaß und Auslaß über eine außerhalb des Etagenreaktors liegende Leitung für die Produktrückführung verbunden sind, in die eine Zuführung für das Produkt, eine Beheizung für das Produkt und Elemente zur Aufteilung des Produktstroms in Teilströme integriert sind.

In der Zeichnung sind mehrere Ausführungsbeispiele in Form von verfahrenstechnischer Fließbildern dargestellt, die nachstehend näher beschrieben werden.

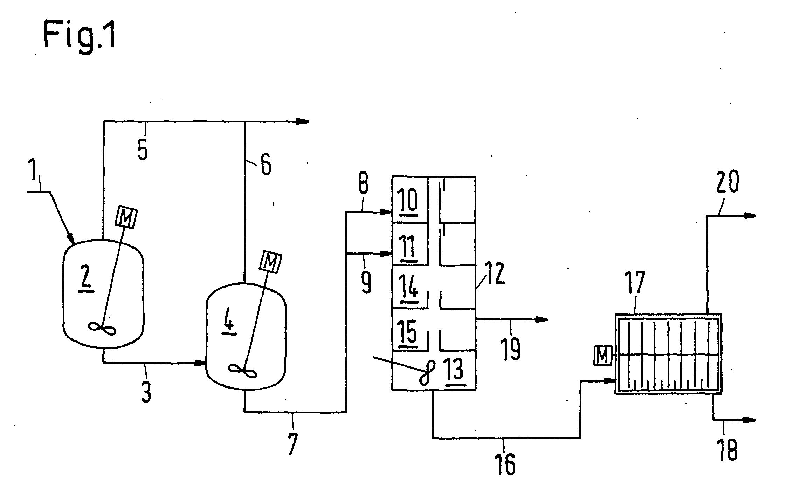

Fig. 1 zeigt eine aus vier Reaktionsstufen bestehende Anlage zur Herstellung von PET, bei der über Leitung (1) der als Rührreaktor ausgebildeten ersten Reaktionsstufe (2), in der eine Temperatur von 260° C und ein Druck von 1600 mbar (abs) herrschen, eine pastöse Mischung aus PTA und EG zusammen mit Katalysatorlösung kontinuierlich zugeführt werden. Der aus der ersten Reaktionsstufe (2) austretende Produktstrom wird über Leitung (3) der als Rührreaktor ausgebildeten zweiten, eine Temperatur von 263° C und einen Druck von 1080 mbar (abs) aufweisenden Reaktionsstufe (4) aufgegeben. Die bei der Veresterung gebildeten Brüden werden über die Leitungen (5,6) zu einer nicht dargestellten Rektifizierkolonne abgeführt und in dieser in Wasser und EG zerlegt. Das Erzeugung des pastösen Gemisches eingesetzt. Der einen Veresterungsgrad von 97 % aufweisende Produktstrom wird über Leitung (7) aus der Reaktionsstufe (4) abgeleitet und in zwei Produktteilströme gleicher Menge aufgeteilt, die über Leitungen (8,9) zum Zwecke der Vorpolykondensation in zwei identische Eingangsetagen (10,11) eines senkrecht stehenden Etagenreaktors (12) mit gerührtem Bodenraum (13) bei einem Druck von 15 mbar (abs) eingespeist werden, über nachfolgende Etagen (14,15) zum Bodenraum (13) strömen und in diesem wieder vereinigt werden. Über Leitung (16) wird der aus dem Etagenreaktor (12) fließende Produktstrom einem Rührscheibenreaktor (17) mit Ringscheiben zur Polykondensation an dessen Vorderseite aufgegeben und das fertige Polymer an dessen Rückseite über Leitung (18) ausgetragen. Über Leitung (19) des Etagenreaktors (12) und über Leitung (20) des Rührscheibenreaktors (17) wird das jeweils benötigte Betriebsvakuum angelegt. Zur Vermeidung von Tröpfchenmitriß können die Etagen (10,11,14,15) des Etagenreaktors (12) gekammert und mit Tropfenabscheidern versehen sein. Mit dem vorstehend beschriebenen Anlagenkonzept lassen sich kritische Dampfbelastungen auch bei hohen Durchsätzen vermeiden.

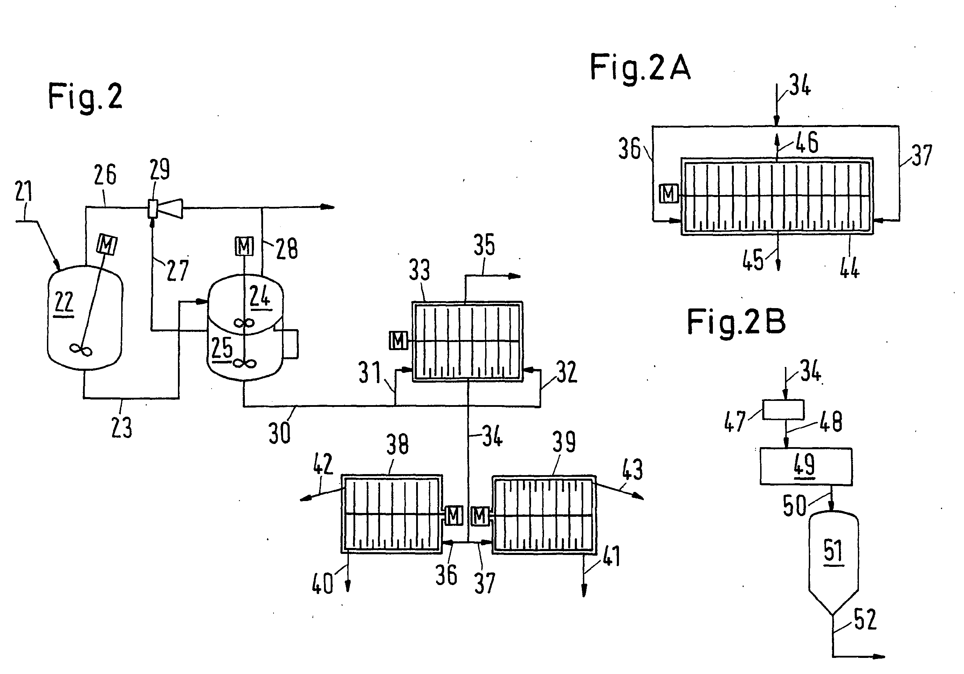

Eine weitere Ausgestaltung des erfindungsgemäßen Verfahrens zeigt Fig. 2. Über Leitung (21) wird zur Veresterung die aus PTA und EG bestehende pastöse Mischung zusammen mit Katalysatorlösung der ersten als Rührbehälter ausgebildeten Reaktionsstufe (22) und das Reaktionsprodukt über Leitung (23) der zweiten aus einem Rührbehälter bestehenden Reaktionsstufe (24) zugeleitet, in der eine Vakuumteilstufe (25) mit einem Druck von 550 mbar (abs) integriert ist. Über Leitungen (26,27,28) werden die bei der Veresterung entstehenden Brüden zu einer nicht dargestellten Rektifizierkolonne geleitet und in Wasser und EG getrennt, wobei die aus der Vakuumteilstufe (25) bei einer Temperatur von 267 °C ausströmenden Brüden mittels einer Gasstrahlpumpe (29), die mit den Brüden der ersten Reaktionsstufe (22) als Treibdampf betrieben wird, verdichtet werden. Der über Leitung (30) aus der Vakuumteilstufe (25) entnommene Produktstrom wird in zwei Produktteilströme gleicher Menge aufgeteilt, von denen der eine Produktteilstrom über Leitung (31) an der Vorderseite und der andere über Leitung (32) an der Rückseite eines Rührscheibenreaktors (33) mit Lochscheiben zum Zwecke der Vorpolykondensation aufgegeben wird, wobei die Teilströme axial von außen nach innen zwei separate, spiegelsymmetrisch identische Reakfionsräume durchströmen. Die Produktströme werden in der Mittelebene des Rührscheibenreaktors (33) zusammengeführt und das eine (35) wird das erforderliche Vakuum erzeugt und gleichzeitig die bei der Vorpolylcondensation gebildeten Brüden zum Zwecke der Rückgewinnung von EG abgeleitet. Der über Leitung (34) abfließende Produktstrom wird in zwei Teilströme aufgeteilt, die jeweils über eine Leitung (36) bzw. eine Leitung (37) einem Rührscheibenreaktor (38,39) zur Polykondensation aufgegeben werden. Das Polykondensationsprodukt, das eine Temperatur von 282 °C besitzt, wird jeweils über die Leitungen (40,41) aus den Rührscheibenreaktoren (38,39) ausgetragen. Das in den Rührscheibenreaktoren notwendige Vakuum wird an den Leitungen (42, 43) angelegt. Zwei Reaktoren dienen einerseits der Maximierung der gesamten Anlagenkapazität und zum ändern der Polymerdiversifizierung sowie einer dezentralen Produktverteilung beim Direktspinnen.

Gemäß Fig. 2a ist es auch möglich, den über die Leitungen (36) abfließenden Teilstrom an der Vorderseite und den über Leitung (37) abfließenden Teilstrom an der Rückseite eines Rührscheibenreaktors (44) mit Lochscheiben und Ringscheiben aufzugeben und die. Teilströme axial von außen nach innen durch zwei separate, spiegelsymmetrisch identische Reaktionsräume zu leiten. Der aus den zusammengeführten Teilströmen entstehende Produktstrom wird in der Mittelebene des Rührscheibenbehälters über Leitung (45) ausgetragen. Über Leitung (46) wird das notwendige Vakuum hergestellt und die bei der Polykondensation gebildeten Brüden abgeführt.

Eine weitere Abwandlung des Verfahrens nach Fig. 2 zeigt Fig. 2b. Danach besteht die Möglichkeit, aus dem über Leitung (34) abgeführten Produktstrom aus vorpolykondensiertem PET zunächst amorphe oder teilkristalline Chips in einem Granuliersystem (47) herzustellen, diese über Leitung (48) einem Kristallisatorsystem (49) mit einer Temperatur von 210 °C zuzuführen und anschließend über Leitung (50) einer Feststoff-Polykondensation im Inertgasstrom bei Temperaturen bis zu 230 °C einem als SSP-Reaktor (SSP = Solid State Polycondensation) bekannten senkrechten Rohr-Reaktor (51) aufzugeben. Die fertigen Chips werden über Leitung (52) aus dem SSP-Reaktor ausgetragen.

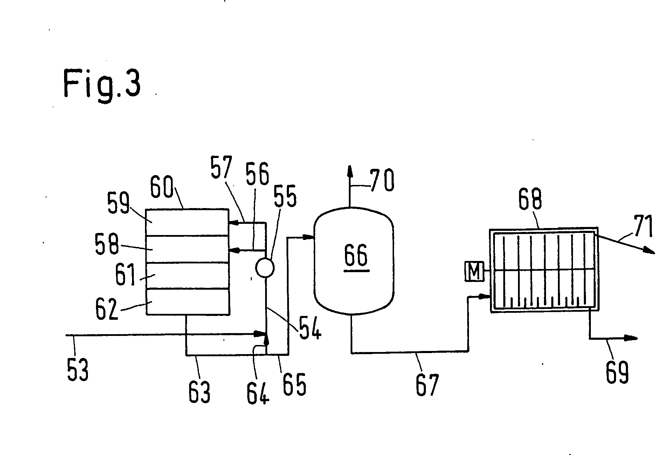

Zur kontinuierlichen Herstellung von Polybutylenterephthalat (PBT) werden PTA und Butandiol (BDO) zusammengemischt und das pastöse Gemisch gemäß Fig. 3 über Leitung Produktteilströme gleicher Menge aufgeteilt, die dann über Leitung (56) und Leitung (57) in die parallel angeordneten separaten Eingangsetagen (58 bzw. 59) eines Etagenreaktors (60) zur Veresterung bei einer Temperatur von 245 °C und einem Druck von 400 mbar (abs) eingetragen werden. Die getrennt voneinander geführten Produktteilströme werden in der Zwischenetage (61) zusammengeführt und aus dem Bodenraum (62) über Leitung (63) abgeführt. Ein überwiegender Anteil dieses Produktstroms wird über Leitung (64) nach 53 Entnahme des Veresterungsprodukts und Einspeisung der Rohstoffe über Leitung (53) zum Kopf des Etagenreaktors (60) in Leitung (54) zurückgeführt. Der verbleibende Restmenge des aus dem Etagenreaktor (60) ausgetragenen Produktstroms wird über Leitung (65) der Reaktionsstufe (66) zugeführt, in der bei einer Temperatur von 240 °C und einem Druck von 20 mbar (abs) die Vorpolykondensation erfolgt. Zur Polykondensation wird das Vorpolykondensat über Leitung (67) einem Rührscheibenreaktor (68) zugeleitet, aus dem das fertige PBT über Leitung (69) ausgetragen wird.

Das bei der Veresterung gebildete Gemisch aus Wasser, Tetrahydrofuran (THF) und BDO wird in einer Rektifizierkolonne behandelt, THF und Wasser als Kopfprodukt einer THF-Rückgewinnung zugeführt und BDO als Sumpfprodukt dem Etagenreaktor (60) erneut aufgegeben. Die Brüden aus der Vorpolykondensationsstufe (66) und aus dem Rührschebenreaktor (68) werden über Leitungen (70,71) zu separaten Vakuumsystemen abgesaugt und zum Zwecke der Rückführung von BDO einer partiellen Kondensation unterworfen.

## Patentansprüche

1. Vorrichtung zur kontinuierlichen Herstellung von Polyestern, Copolyestem oder Polycarbonaten durch Veresterung von Dicarbonsäuren oder Dicarbonsäureestern und Diolen oder durch Umesterung von Dialkylcarbonaten oder Diarylcarbonaten mit Bisphenolen in wenigstens einer Reaktionsstufe (2, 4, 22, 24, 25, 60), Vorpolykondensation des Veresterungs- oder Umesterungsproduktes in wenigstens einer Reaktionsstufe (12, 33, 66) und Polykondensation des Vorpolykondensationsproduktes in wenigstens einer Reaktionsstufe (17, 38, 39, 44, 68), wobei bei wenigstens einer der Reaktionsstufen ein zugeführter Produktstrom vor oder innerhalb der Reaktionsstufe in mindestens zwei Teilströme aufteilbar und die Teilströme ganz oder teilweise getrennt voneinander durch die Reaktionsstufe (12, 33, 44, 60) leitbar sind, die als Kaskadenreaktor oder Käfigreaktor mit mindestens zwei räumlich getrennten, in nacheinander separat durchströmbare Teilräume gegliederten Abschnitten ausgebildet ist, **dadurch gekennzeichnet, dass** eine die Teilströme leitende Reaktionsstufe zur Vorpolykondensation oder Polykondensation (33, 44) entweder als Rührscheibenreaktor mit zwei separaten, spiegelsymmetrisch identischen Reaktionsräumen ausgebildet ist oder dass eine die Teilströme leitende Reaktionsstufe zur Vorpolykondensation oder Umesterung (12, 60) als Etagenreaktor mit parallel geschalteten Etagen (10, 11, 58, 59) für die Führung der Teilströme ausgebildet ist.

2. Vorrichtung nach Anspruch 1, **dadurch gekennzeichnet, dass** der Kaskadenreaktor als liegender Kaskadenreaktor ausgebildet ist und ein Rührscheibenreaktor (35) mit Loch- oder Ringscheiben ist.

3. Vorrichtung nach Anspruch 2, **dadurch gekennzeichnet, dass** bei aufeinander zulaufenden Teilströmen der Einlass für die Teilströme jeweils an den Stirnseiten und der Auslass des aus den Teilströmen gebildeten Produktstroms im Mittelbereich des Rührscheibenreaktors (35) angebracht sind.

4. Vorrichtung nach Anspruch 2, **dadurch gekennzeichnet, dass** bei in entgegen gesetzter Richtung auseinander laufenden Teilströmen der Einlass für den zur Bildung der Teilströme zugeführten Produktstrom im Mittelbereich und der Auslass der Teilströme jeweils an den Enden des Rührscheibenreaktors (35) angebracht sind.

5. Vorrichtung nach Anspruch 1, **dadurch gekennzeichnet, dass** die Reaktionsstufe (12, 33, 44, 60) als Etagenreaktor (12, 60), ausgebildet ist, bei dem wenigstens zwei Einlässe (8, 9, 56, 57) für den Produktstrom im Kopfbereich und der Auslass für den Produktstrom der zusammengeführten Teilströme im Boden und zumindest im oberen Abschnitt parallel geschaltete Etagen (10, 11, 58, 59) für die Führung der Teilströme und eine anschließende Etage (14, 15, 61) oder ein Bodenraum (13, 62) für die Zusammenführung der Teilströme angeordnet sind.

6. Vorrichtung nach Anspruch 5, **dadurch gekennzeichnet, dass** Einlass und Auslass über eine außerhalb des Etagenreaktors (60) geführte Rückführung des ausgetragenen Produkts mittels der Leitungen (63, 64, 54) mit darin enthaltenen Elementen zur Aufteilung des Produktstroms in Leitung (54) zu separaten Einlässen (58, 59) verbunden sind.

7. Vorrichtung nach einem der Ansprüche 1 bis 6, **gekennzeichnet durch** aus zwei Rührreaktoren (2, 4) bestehende Veresterungsstufen, eine aus einem Etagenreaktor (12) bestehende Vorpolykondensationsstufe und einem aus einem Rührscheibenreaktor (17) bestehende Polykondensationsstufe.

8. Vorrichtung nach einem der Ansprüche 1 bis 6, **gekennzeichnet durch** aus zwei Rührreaktoren (22, 24) und einer Vakuumstufe (25) bestehende Veresterungsstufen, eine aus einem Rührscheibenreaktor (33) bestehende Vorpolykondensationsstufe und eine aus einem Rührscheibenreaktor (38, 39) bestehende Polykondensationsstufe.

9. Vorrichtung nach einem der Ansprüche 1 bis 6, **gekennzeichnet durch** aus zwei Rührreaktoren (22, 24) und einer Vakuumstufe (25) bestehende Veresterungsstufen, eine aus einem Rührscheibenreaktor (33) bestehende Vorpolykondensationsstufe, ein Granuliersystem (47), ein Kristallisatorsystem (49) und eine aus einem senkrechten Rohr-Reaktor (51) bestehende Feststoff-Polykondensationsstufe.

10. Verfahren zur kontinuierlichen Herstellung von Polyestern, Copolyestem oder Polycarbonaten durch Veresterung von Dicarbonsäuren oder Dicarbonsäureestern und Diolen oder durch Umesterung von Dialkylcarbonaten oder Diarylcarbonaten mit Bisphenolen in wenigstens einer Reaktionsstufe (2, 4, 22, 24, 25, 60), Vorpolykondensation des Veresterungs- oder Umesterungsproduktes in wenigstens einer Reaktionsstufe (12, 33, 66) und Polykondensation des Vorpolykondensationsproduktes in wenigstens einer Reaktionsstufe (17, 38, 39, 44, 68) unter Verwendung einer Vorrichtung nach den Ansprüchen 1 bis 9, **dadurch gekennzeichnet, dass** entweder in einer als Rührscheibenreaktor ausgebildeten Reaktionsstufe zur Vorpolykondensation oder Polykondensation (33, 44) der zugeführte Produktstrom in mindestens zwei Teilströmen durch zwei separate, spiegelsymmetrisch identische Reaktionsräume geleitet wird oder in einer als Etagenreaktor ausgebildeten Reaktionsstufe zur Vorpolykondensation oder Umesterung (12, 60) der zugeführte Produktstrom in mindestens zwei Teilströmen durch parallel geschaltete Etagen (10, 11, 58, 59) geleitet wird.

11. Verfahren nach Anspruch 10, **dadurch gekennzeichnet, dass** die Teilströme bis zu einem gemeinsamen Produktabfluss aufeinander zulaufend durch die Reaktionsstufe (12, 33, 44, 60) geleitet werden, wobei die Teilströme in der Reaktionsstufe spätestens beim Auslass zusammengeführt werden und die Menge der in die Reaktionsstufen ein- oder ausgeleiteten Produktströme kontrolliert wird.

12. Verfahren nach einem der Ansprüche 10 und 11, **dadurch gekennzeichnet, dass** die Teilströme in der Reaktionsstufe (12, 33, 44, 60) abschnittsweise parallel zueinander in Richtung eines gemeinsamen Produktabflusses geleitet werden, wobei die Teilströme in der Reaktionsstufe spätestens beim Auslass zusammengeführt werden und die Menge der in die Reaktionsstufen ein- oder ausgeleiteten Produktströme kontrolliert wird.

13. Verfahren nach Anspruch 11 oder 12, **dadurch gekennzeichnet, dass** die Teilströme in gleich großen Mengen durch die Reaktionsstufe (12, 33, 44, 60) geleitet werden.

14. Verfahren nach Anspruch 10, **dadurch gekennzeichnet, dass** die Teilströme in der Reaktionsstufe (12, 33, 44, 60) für die Vorpolykondensation oder Polykondensation in entgegen gesetzter Richtung auseinander laufend zu getrennten Auslässen geleitet werden.

15. Vorrichtung nach einem der Ansprüche 1 bis 6, **gekennzeichnet durch** aus zwei Rührreaktoren (22, 24) und einer Vakuumstufe (25) bestehende Veresterungsstufen, eine aus einem Etagenreaktor (12, 60) bestehende Vorpolykondensationsstufe und eine aus einem Rührscheibenreaktor (38, 39) bestehende Polykondensationsstufe.

16. Vorrichtung nach einem der Ansprüche 1 bis 6, **gekennzeichnet durch** aus zwei Rührreaktoren (22, 24) und einer Vakuumstufe (25) bestehende Veresterungsstufen, eine aus einem Etagenreaktor (12, 60) bestehende Vorpolykondensationsstufe, ein Granuliersystem (47), ein Kristallisatorsystem (49) und eine aus einem senkrechten Rohr-Reaktor (51) bestehende Feststoff-Polykondensationsstufe.

## Claims

1. Device for the continuous production of polyesters, copolyesters or polycarbonates by esterification of dicarboxylic acids or dicarboxylic acid esters and diols or by reesterification of dialkyl carbonates or diaryl carbonates with bisphenols in at least one reaction stage (2, 4, 22, 24, 25, 60), prepolycondensation of the esterification or reesterification product in at least one reaction stage (12, 33, 66) and polycondensation of the prepolycondensation product in at least one reaction stage (17, 38, 39, 44, 68), in at least one of the reaction stages a product stream supplied being divisible into at least two partial streams before or within the reaction stage and the partial streams being conductible completely or partially separately from each other through the reaction stage (12, 33, 44, 60) which, being a cascade reactor or a cage reactor, is designed with at least two spatially separate sections divided into partial chambers through which sequential separate flow is possible **characterised in that** a reaction stage, conducting the partial streams, to the prepolycondensation or polycondensation (33, 44) is designed either as an impeller disc reactor with two separate mirror-symmetrically identical reaction chambers or that a reaction stage, conducting the partial streams, to prepolycondensation or reesterification (12, 60) is designed as a multiplate reactor with plates regulated in parallel (10, 11, 58, 59) for conducting the partial streams.

2. Device according to claim 1, **characterised in that** the cascade reactor is designed as a horizontal cascade reactor and is an impeller disc reactor (35) with perforated or annular discs.

3. Device according to claim 2, **characterised in that**, in the case of partial streams flowing towards each other, the inlet for the partial streams are arranged at the fronts and the outlet for the product stream formed from the partial streams in the central area of the impeller disc reactor (35), repsectively

4. Device according to claim 2, **characterised in that**, in the case of partial streams flowing in the opposite direction from each other, the inlet for the product stream supplied to form the partial streams are arranged in the central section and the outlet for the partial streams at the ends of the impeller disc reactor (35), respectively.

5. Device according to claim 1, **characterised in that** the reaction stage (12, 33, 44, 60) is designed as a plate reactor (12, 60) in the case of which at least two inlets (8, 9, 56, 57) for the product stream are arranged in the head area and the outlet for the product stream of the joined partial streams in the bottom and at least in the upper section of plates controlled in parallel (10, 11, 58, 59) for conducting the partial streams and a subsequent plate (14, 15, 61) or a bottom chamber (13, 62) are arranged for combining the partial streams.

6. Device according to claim 5, **characterised in that** the inlet and outlet are connected via a recycling facility for the product discharged, regulated outside the plate reactor (60), by lines (63, 64, 54) with elements contained therein for dividing the product stream in line (54) towards separate inlets (58, 59).

7. Device according to one of claims 1 to 6 **characterised by** esterification stages consisting of two stirred reactors (2, 4), a prepolycondensation stage consisting of a plate reactor (12) and a polycondensation stage consisting of an impeller disc reactor (17).

8. Device according to one of claims 1 to 6 **characterised by** esterification stages consisting of two stirred reactors (22, 24) and a vacuum stage (25), a prepolycondensation stage consisting of an impeller disc reactor (33) and a polycondensation stage consisting of an impeller disc reactor 38, 39).

9. Device according to one of claims 1 to 6 **characterised by** preesterification stages consisting of two stirred reactors (22, 24) and a vacuum stage (25), a prepolycondensation stage consisting of an impeller disc reactor (33), a granulating system (47), a crystalliser system (49) and a solids polycondensation stage consisting of a vertical tubular reactor (51).

10. Process for the continuous production of polyesters, copolyesters or polycarbonates by esterification of dicarboxylic acids or dicarboxylic acid esters and diols or by reesterification of dialkyl carbonates or diaryl carbonates with bisphenols in at least one reaction stage (2, 4, 22, 24, 25, 60), prepolycondensation of the esterification or reesterification product in at least one reaction stage (12, 33, 66) and polycondensation of the prepolycondensation product in at least one reaction stage (17, 38, 39, 44, 68) using a device according to claims 1 to 9 **characterised in that** the product stream supplied, either in a reaction stage, designed as an impeller disc reactor, to the prepolycondensation or polycondensation (33, 44), is passed, in the form of at least two partial streams, through two separate, mirror-symmetrically identical reaction chambers or the product stream supplied is passed in the form of at least two partial streams, in a reaction stage, designed as plate reactor, to the polycondensation or reesterification (12, 60), through plates controlled in parallel (10, 11, 58, 59).

11. Process according to claim 10, **characterised in that** the partial streams are conducted through the reaction stage (12, 33, 44, 60) in a manner flowing towards each other up to a joint product discharge, the partial streams being combined in the reaction stage no later than at the outlet and the quantity of the product streams introduced into or discharged from the reaction stages being regulated.

12. Process according to one of claims 10 and 11, **characterised in that** the partial streams are conducted in the reaction stage (12, 33, 44, 60) in sections parallel to each other in the direction of a joint product discharge, the partial streams being combined in the reaction stage no later than at the outlet and the quantity of the product streams introduced into or discharged from the reaction stages being regulated.

13. Process according to claim 11 or 12, **characterised in that** the partial streams are conducted in quantities of equal size through the reaction stage (12, 33, 44, 60).

14. Process according to claim 10, **characterised in that** the partial streams are conducted in the reaction stage (12, 33, 44, 60) for the prepolycondensation or polycondensation in a manner flowing away from each other in the opposite direction to separate outlets.

15. Device according to one of claims 1 to 6, **characterised by** esterification stages consisting of two stirred reactors (22, 24) and a vacuum stage (25), a prepolycondensation stage consisting of a plate reactor (12, 60) and a poly condensation stage consisting of an impeller disc reactor (38, 39).

16. Device according to one of claims 1 to 6, **characterised by** esterification stages consisting of two stirred reactors (22, 24) and a vacuum stage (25), a prepolycondensation stage consisting of a plate reactor (12, 60), a granulating system (47), a crystalliser system (49) and a solids polycondensation stage consisting of a vertical tubular reactor (51).

## Revendications

1. Dispositif de production en continu de polyesters, de copolyesters ou de polycarbonates par estérification complète d'acides dicarboxyliques ou d'esters d'acides dicarboxyliques et de diols ou par transestérification de dialkylcarbonates ou de diaryl carbonates avec des bisphénols dans au moins une étape réactionnelle (2, 4, 22, 24, 25, 60), par prépolycondensation du produit d'estérification complète ou de transestérification dans au moins une étape réactionnelle (12, 33, 66) et par polycondensation du produit de la prépolycondensation dans au moins une étape réactionnelle (17, 38, 39, 44, 68), du type selon lequel pour au moins l'une des étapes réactionnelles un flux de produit alimenté avant ou à l'intérieur de l'étape réactionnelle est susceptible de partition en au moins deux flux partiels, qui sont susceptibles d'être dirigés en totalité ou de manière séparée partiellement à travers l'étape réactionnelle (12, 33, 44, 60) qui a la conformation d'un réacteur en cascade ou à cage ayant au moins deux sections séparées, subdivisées en compartiments susceptibles d'être successivement parcourus séparément,
**caractérisé en ce que** soit une étape réactionnelle destinée à la prépolycondensation ou à la polycondensation (33, 44) et dirigeant les flux partiels a la conformation d'un réacteur à disques d'agitation ayant deux espaces réactionnels séparés et présentant une identité de configuration symétrique par réflexion dans un miroir, soit une étape réactionnelle destinée à la prépolycondensation ou à la transestérification (12, 60) et dirigeant les flux partiels a la conformation d'un réacteur étagé ayant des étages montés en parallèle (10, 11, 58, 59) pour le guidage des flux partiels.

2. Dispositif selon la revendication 1, **caractérisé en ce que** le réacteur en cascade est conformé en tant que réacteur en cascade et en disposition couchée et est un réacteur à disques d'agitation (35) ayant des disques perforés ou annulaires.

3. Dispositif selon la revendication 2, **caractérisé en ce que** dans le cas de flux partiels superposés sont rapportées d'une part l'admission pour les flux partiels chaque fois sur les faces frontales du réacteur à disques d'agitation (35), et d'autre part l'évacuation du flux de produit, constitué à partir des flux partiels, dans la zone médiane dudit réacteur.

4. Dispositif selon la revendication 2, **caractérisé en ce que** dans le cas de flux partiels circulant à contre-courant sont implantées d'une part l'admission pour le flux de produit, alimenté en vue de la formation des flux partiels, dans la zone médiane du réacteur à disques d'agitation (35), et d'autre part l'évacuation des flux partiels chaque fois aux extrémités dudit réacteur.

5. Dispositif selon la revendication 1, **caractérisé en ce que** l'étape réactionnelle (12, 33, 44, 60) est conformée en tant que réacteur étagé (12, 60), selon lequel sont disposés au moins deux admissions (8, 9, 56, 57) pour le flux de produit en tête de réacteur, l'évacuation pour le flux de produit, constitué par la réunion des flux partiels, en fond de réacteur, ainsi que des étages (10, 11, 58, 59) prévus pour le guidage des flux partiels et reliés en parallèle dans au moins la section supérieure dudit réacteur, et un étage associé (14, 15, 61) ou un espace de fond de réacteur (13, 62) pour le guidage conjoint des flux partiels.

6. Dispositif selon la revendication 5, **caractérisé en ce que** admission et évacuation sont reliées via un recyclage du produit délivré qui est situé à l'extérieur du réacteur étagé (60), au moyen des conduites (63, 64, 54) et renfermant des éléments destinés à la partition du flux de produit dans la conduite (54) vers des admissions séparées (58, 59).

7. Dispositif selon l'une des revendications 1 à 6, **caractérisé par** des étapes d'estérification complète se composant de deux réacteurs à agitation (2, 4), par une étape de prépolycondensation se composant d'un réacteur étagé (12), ainsi que par une étape de polycondensation se composant d'un réacteur à disques d'agitation (17).

8. Dispositif selon l'une des revendications 1 à 6, **caractérisé par** des étapes d'estérification complète se composant de deux réacteurs à agitation (22, 24) et d'un étage sous vide (25), par une étape de prépolycondensation se composant d'un réacteur à disques d'agitation (33), ainsi que par une étape de polycondensation se composant d'un réacteur à disques d'agitation (38, 39).

9. Dispositif selon l'une des revendications 1 à 6, **caractérisé par** des étapes d'estérification complète se composant de deux réacteurs à agitation (22, 24) et d'un étage sous vide (25), par une étape de prépolycondensation se composant d'un réacteur à disques d'agitation (33), par un système de granulation (47), par un système de cristallisation (49) et par une étape de polycondensation en phasesolide et se composant d'un réacteur tubulaire vertical (51).

10. Procédé de production en continu de polyesters, de copolyesters ou de polycarbonates par estérification complète d'acides dicarboxyliques ou d'esters d'acides dicarboxyliques et de diols ou par transestérification de dialkylcarbonates ou de diarylcarbonates avec des bisphénols dans au moins une étape réactionnelle (2, 4, 22, 24, 25, 60), par prépolycondensation du produit d'estérification complète ou de transestérification dans au moins une étape réactionnelle (12, 33, 66) et par polycondensation du produit de la prépolycondensation dans au moins une étape réactionnelle (17, 38, 39, 44, 68) avec utilisation d'un dispositif selon les revendications 1 à 9, **caractérisé en ce que** soit dans une étape réactionnelle destinée à la prépolycondensation ou à la polycondensation (33, 44) et conformée en tant que réacteur à disques d'agitation (35) et le flux de produit alimenté est dirigé en au moins deux flux partiels à travers deux espaces réactionnels séparés et présentant une identité de configuration symétrique par réflexion dans un miroir, soit dans une étape réactionnelle destinée à la prépolycondensation ou à la transestérification (12, 60) et conformée en tant que réacteur étagé, le flux de produit alimenté en au moins deux flux partiels est dirigé à travers des étages montés en parallèle (10, 11, 58, 59.)

11. Procédé selon la revendication 10, **caractérisé en ce que** les flux partiels sont dirigés à travers l'étape réactionnelle (12, 33, 44, 60) jusqu'à un écoulement commun de produit, les flux partiels dans l'étape réactionnelle étant réunis au plus tard lors de l'évacuation et le débit des flux de produit introduits dans ou évacués hors des étapes réactionnelles étant contrôlé.

12. Procédé selon l'une des revendications 10 et 11, **caractérisé en ce que** les flux partiels dans l'étape réactionnelle (12, 33, 44, 60) sont dirigés, dans une portion de section de ladite étape, selon des courants mutuels parallèles et en direction d'un écoulement commun de produit, les flux partiels dans l'étape réactionnelle étant réunis au plus tard lors de l'évacuation et le débit des flux de produit introduits dans ou évacués hors des étapes réactionnelles étant contrôlé.

13. Procédé selon la revendication 11 ou 12, **caractérisé en ce que** les flux partiels sont dirigés avec des débits égaux à travers l'étape réactionnelle (12, 33, 44, 60).

14. Procédé selon la revendication 10, **caractérisé en ce que** les flux partiels dans l'étape réactionnelle (12, 33, 44, 60) pour la prépolycondensation ou la polycondensation sont dirigés selon un processus d'écoulement respectif à contre-courant, vers des évacuations séparées.

15. Dispositif selon l'une des revendications 1 à 6, **caractérisé par** des étapes d'estérification complète se composant de deux réacteurs à agitation (22, 24) et d'un étage sous vide (25), par une étape de prépolycondensation se composant d'un réacteur étagé (12, 60), ainsi que par une étape de polycondensation se composant d'un réacteur à disques d'agitation (38, 39).

16. Dispositif selon l'une des revendications 1 à 6, **caractérisé par** des étapes d'estérification complète se composant de deux réacteurs à agitation (22, 24) et d'un étage sous vide (25), par une étape de prépolycondensation se composant d'un réacteur étagé (12, 60), par un système de granulation (47), par un système de cristallisation (49) ainsi que par une étape de polycondensation en phase solide se composant d'un réacteur tubulaire vertical (51).
